# EUROPÄISCHE PATENTSCHRIFT

(11) **EP 3 727 906 B1**
(45) Veröffentlichungstag und Bekanntmachung des Hinweises auf die Patenterteilung: **09.06.2021**
(21) Anmeldenummer: 18814796.1
(22) Anmeldetag: 22.11.2018
(51) Int. Cl.: B60G 13/00, B60G 15/06, F16F 9/54, B62D 25/08, F16F 9/32, F16F 9/58

(54) **LAGERUNGSSYSTEM ZUR ELASTISCHEN LAGERUNG EINES FEDERBEINS ODER EINES SCHWINGUNGSDÄMPFERS SOWIE EIN FEDERBEIN ODER EIN SCHWINGUNGSDÄMPFER**
BEARING SYSTEM FOR ELASTICALLY BEARING A SUSPENSION STRUT OR A VIBRATION DAMPER, AS WELL AS A SUSPENSION STRUT OR A VIBRATION DAMPER
SYSTÈME DE PALIER CONÇU POUR SUPPORTER DE MANIÈRE ÉLASTIQUE UNE JAMBE DE FORCE OU UN AMORTISSEUR DE VIBRATIONS, ET JAMBE DE FORCE OU AMORTISSEUR DE VIBRATIONS

(30) Priorität: 07.02.2018 DE 102018102745
(43) Veröffentlichungstag der Anmeldung: 28.10.2020
(73) Patentinhaber: Vibracoustic SE, 64293 Darmstadt (DE)
(72) Erfinder: WERNER, Philipp, 21339 Lüneburg (DE); KARDOES, Hilrich, 21423 Winsen (DE); MESS, Michael, 21218 Seevetal (DE); GESLAIN, Antoine, 44300 Nantes (FR)
(74) Vertreter: Patentanwälte Olbricht Buchhold Keulertz
(86) Internationale Anmeldenummer: PCT/EP2018/082283
(87) Internationale Veröffentlichungsnummer: WO 2019/154537

(56) Entgegenhaltungen:
- EP-A2- 2 295 270
- WO-A1-2018/024500
- WO-A1-2018/024508
- DE-A1- 3 713 699
- DE-A1- 4 440 030
- DE-A1- 10 335 956
- DE-A1- 19 758 524
- DE-A1-102014 205 194

## Beschreibung

Die vorliegende Erfindung betrifft ein Lagerungssystem zur elastischen Lagerung eines Federbeins oder eines Schwingungsdämpfers an einer Fahrzeugkarosserie, aufweisend eine Lagereinheit zur Lagerung einer Kolbenstange des Federbeins oder des Schwingungsdämpfers, einen karosserieseitigen Aufnahmetopf, in den die Lagereinheit einsetzbar ist, und eine Fixierungseinrichtung. Ferner betrifft die Erfindung ein Federbein oder einen Schwingungsdämpfer mit einem derartigen Lagerungssystem.

Ein Federbein oder ein Schwingungsdämpfer der eingangs genannten Art wird in einem Fahrwerk eines Fahrzeugs eingesetzt, um die von den Fahrbahnunebenheiten hervorgerufenen Schwingungen zu bedämpfen. Hierzu ist es bekannt, das Federbein oder den Schwingungsdämpfer über ein sogenanntes Domlager mit der Fahrzeugkarosserie zu verbinden. Das Domlager ermöglicht eine Drehbewegung des Federbeins oder des Schwingungsdämpfers relativ zu der Fahrzeugkarosserie und gleicht einen Winkelversatz des Federbeins oder des Schwingungsdämpfers zu der Fahrzeugkarosserie aus. Das Domlager ist üblicherweise als ein Gummimetalllager ausgebildet. Dieses Gummimetalllager befindet sich in der Regel in einer Lageraufnahme, dem Topmountgehäuse, welches mit der Fahrzeugkarosserie verschraubt wird.

Zur Befestigung des Federbeins oder des Schwingungsdämpfers an der Fahrzeugkarosserie wird die Kolbenstange des Federbeins oder des Schwingungsdämpfers mit dem Kern des Gummimetalllagers verschraubt. Diese Verschraubung erfolgt in der Regel von oben, so dass ein ausreichender Raum für die Montage vorgehalten sein muss. Gerade bei Topmounts an der Hinterachse stellt das die Konstrukteure regelmäßig vor Herausforderungen.

DE 103 35 956 A1 offenbart eine Federkonstruktion, die ein Rundlager, eine obere Abdeckung und eine untere Abdeckung umfasst. Das Rundlager ist zwischen den Abdeckungen aufgenommen. Die untere Abdeckung ist mittels eines Ringsegments an der oberen Abdeckung befestigt. In der unteren Abdeckung ist ein Dämpfungselement aufgenommen.

Aus DE 37 13 699 C2 geht eine karosserieseitige Lagerung eines Federbeins oder eines Federdämpfers hervor, bei der ein Gummimetalllager auf einem freien Ende einer Dämpferkolbenstange mittels einer Mutter vormontiert wird und von unten in einen Aufnahmetopf einer Fahrzeugkarosserie eingesetzt wird. Um das Gummimetalllager und damit auch das Federbein in Ausfederungsrichtung zu halten, wird das Gummimetalllager in dem Aufnahmetopf mit karosseriefesten Teilen verrastet. Hierzu wird ein Spreng- oder Federring in eine im Randbereich einer Schulter eines Blechaußentopfes des Gummimetalllagers eingebrachte Aufnahme eingelegt. Der Spreng- oder Federring greift beim Einsetzen in Schlitze des Aufnahmetopfs ein.

Des Weiteren geht aus DE 197 58 524 C2 eine Schnellverbindung zwischen einem Anschlussteil eines elastischen Gelenks, welches mit einer Kolbenstange eines Federbeins verbunden ist und einem Blech einer Karosserie hervor. Die Karosserie ist mit nach oben gebogenen und mit Vertiefungen versehenen Zungen versehen, während das Anschlussteil im Bereich des zylindrischen Abschnitts eine Ringnut besitzt, in die ein Sprengring eingelegt ist. Bei der Montage greift der zylindrische Abschnitt des Anschlussteils in die von den Zungen gebildete elastische Öffnung, bis der Sprengring in die Vertiefungen der Zungen eingreift. Anschließend wird eine metallische Abdeckung außen auf die Zungen aufgepresst, wodurch eine radiale und axiale feste Verbindung des Anschlussteils mit der Karosserie erhalten wird.

Aus DE 44 40 030 A1 ist eine Lagerung für einen Schwingungsdämpfer zwischen einer Fahrzeugkarosserie und einer Fahrzeugachse mit einem napfförmigen Domblech bekannt, das zur Befestigung des Schwingungsdämpfers dient. Das Domblech weist radial bewegliche Federzungen auf, deren Außen- und Innenmantelflächen frei zugänglich sind. An den jeweiligen Stirnflächen der Federzungen wird der Schwingungsdämpfer auf der Fahrzeugkarosserie abgestützt. Für eine Fixierung in die entgegengesetzte Richtung weist das Domblech eine Krempe auf, in die ein elastischer Klemmkörper eingelegt ist. Dieser Klemmkörper greift an der Fahrzeugkarosserie an, so dass die Fahrzeugkarosserie zwischen den Federzungen und dem Klemmkörper verspannt ist.

EP 2 295 270 A2 offenbart eine Lagerung für einen Schwingungsdämpfer. Die Lagerung umfasst Formschlusselemente, die das Gehäuse an einer Fahrzeugkarosserie halten. Die Formschlusselemente sind als Schnapphaken ausgebildet und werden durch ein Sperrelement blockiert. Das Sperrelement wird zentral innerhalb der Schnapphaken eingelegt.

Der vorliegenden Erfindung liegt die Aufgabe zugrunde, ein Lagerungssystem zur elastischen Lagerung eines Federbeins oder eines Schwingungsdämpfers an einer Fahrzeugkarosserie und ein Federbein oder einen Schwingungsdämpfer zu schaffen, das eine verbesserte und kostengünstigere Befestigung der Lagerung aufweist und dabei keinen Montagezugang von oben erfordert.

Zur Lösung der Aufgabe wird ein Lagerungssystem mit den Merkmalen des Anspruchs 1 und ein Federbein oder ein Schwingungsdämpfer mit den Merkmalen des Anspruchs 14 vorgeschlagen.

Vorteilhafte Ausgestaltungen des Lagerungssystems sind Gegenstand der abhängigen Ansprüche.

Das erfindungsgemäße Lagerungssystem zur elastischen Lagerung eines Federbeins oder eines Schwingungsdämpfers an einer Fahrzeugkarosserie weist eine Lagereinheit zur Lagerung einer Kolbenstange des Federbeins oder des Schwingungsdämpfers, einen karosserieseitigen Aufnahmetopf, in den die Lagereinheit einsetzbar ist, und eine Fixierungseinrichtung, die die Lagereinheit vor einem Herausziehen aus dem Aufnahmetopf sichert, auf, wobei die Lagereinheit wenigstens eine Zusatzfederaufnahmeeinrichtung und ein Elastomerlager zur elastischen Lagerung der Kolbenstange aufweist, das einen Kern zur Aufnahme der Kolbenstange, einen Elastomerkörper und wenigstens ein Ringelement aufweist, wobei das Elastomerlager und die Fixierungseinrichtung derart in den Aufnahmetopf eingesetzt sind, dass die Fixierungseinrichtung einen am Aufnahmetopf ausgebildeten Hinterschnitt hintergreift, dass sich das Ringelement auf der Fixierungseinrichtung abstützt und dass der Elastomerkörper vorgespannt ist und das Ringelement gegen die Fixierungseinrichtung drückt.

Mit dem erfindungsgemäßen Lagerungssystem ist es möglich, die Lagereinheit in den Aufnahmetopf einzusetzen und gleichzeitig mittels der Fixierungseinrichtung vor einem Herausziehen aus dem Aufnahmetopf zu sichern. Dadurch wird eine Lagerung geschaffen, die eine vereinfachte und kostengünstige Montage ermöglicht. Insbesondere ist das Lagerungssystem derart ausgebildet, dass die Lagereinheit samt der Fixierungseinrichtung von unten in den Aufnahmetopf eingesetzt beziehungsweise eingesteckt, insbesondere eingedrückt werden kann. Die Überführung der Fixierungseinrichtung von einer Montageposition, in welcher das Elastomerlager in den Aufnahmetopf eingeführt ist und die Fixierungseinrichtung an der Lagereinheit positioniert ist, in die Sicherungsposition, in welcher das Elastomerlager in dem Aufnahmetopf gesichert ist, erfolgt während des Einsetzens beziehungsweise Eindrückens in den Aufnahmetopf. Somit ist eine Vormontage des Federbeins oder des Schwingungsdämpfers mit dem Dämpferlager möglich und es ist kein weiterer Montageschritt zur Sicherung der Lagereinheit vor einem Herausziehen aus dem Aufnahmetopf erforderlich. Insbesondere ist es nicht notwendig, eine Erreichbarkeit mit Montagewerkzeugen für die Montage des Lagersystems von oben zu gewährleisten. Ferner ist bei dem erfindungsgemäßen Lagerungssystem eine Demontage ohne Zugang von der anderen Seite der Fahrzeugkarosserie möglich. Dadurch kann im Falle einer Reparatur das Federbein oder der Schwingungsdämpfer samt Lagereinheit einfach demontiert werden, indem die Fixiereinrichtung von unten aus dem Aufnahmetopf gelöst wird. Darüber hinaus kann ein Hinterschnitt einfach und kostengünstig mittels eines Umformverfahrens in dem Aufnahmetopf erzeugen werden. Der Elastomerkörper des wenigstens einen Elastomerlagers der Lagereinheit besteht aus einem elastischen Polymerwerkstoff, wie beispielsweise aus einem Naturkautschuk, auf TPE oder EPDM basierenden Compound oder aus einer Schaumfeder, beispielsweise aus PU. Das Elastomerlager kann ferner einen oder mehrere Elastomerkörper aufweisen.

Mittels des Ringelementes werden beim Einsetzen der Lagereinheit in den Aufnahmetopf das Elastomerlager und die Fixierungseinrichtung zunächst in axialer Richtung überdrückt. Anschließend werden das Elastomerlager und die Fixierungseinrichtung in die Sicherungsposition überführt. Durch das Überdrücken wird eine axiale Vorspannung in den Elastomerkörper des Elastomerlagers eingebracht. In der Sicherungsposition hintergreift die Fixierungseinrichtung einen am Aufnahmetopf ausgebildeten Hinterschnitt, das Ringelement stützt sich auf der Fixierungseinrichtung ab und der Elastomerkörper drückt das Ringelement aufgrund seiner Vorspannung gegen die Fixierungseinrichtung. In der Montageposition ist die Lagereinheit in den Aufnahmetopf eingeführt und die Fixierungseinrichtung ist derart positioniert, dass diese bei einem weiteren Einsetzen beziehungsweise Eindrücken in den Aufnahmetopf eingeführt wird. Dies ist dann zumeist mit einer Durchmesseränderung der Fixierungseinrichtung verbunden. Beim Überführen von der Montageposition in die Sicherungsposition tritt eine Zwischenposition auf, in der das Elastomerlager zunächst an einem Topfboden des Aufnahmetopfs anliegt und axial nicht vorgespannt ist. Die Fixierungseinrichtung weist in der Zwischenposition einen im Vergleich zur Montageposition verringerten Durchmesser auf. Die Durchmesserverringerung resultiert aus der beim Einsetzen der Lagereinheit in den Aufnahmetopf aufgewendeten Kraft. Erst durch das weitere Eindrücken des Elastomerlagers in den Aufnahmetopf wird das Elastomerlager axial vorgespannt. Durch das axiale Vorspannen wird der Elastomerkörper komprimiert. Das Ringelement kann stoffschlüssig mit dem Elastomerkörper des Elastomerlagers verbunden sein. Ferner kann das Ringelement ein separates Teil sein. Von unten bedeutet vorliegend in Axialrichtung gesehen von unten in den Aufnahmetopf.

Vorteilhaft wird beim Einsetzen der Lagereinheit in den Aufnahmetopf die Fixierungseinrichtung von der Montageposition in die Zwischenposition und von der Zwischenposition in eine Sicherungsposition überführt. Weiterhin vorteilhaft weist die Fixierungseinrichtung in der Montageposition einen ersten Durchmesser auf. In der Zwischenposition kann die Fixierungseinrichtung einen zweiten Durchmesser aufweisen, der von dem ersten Durchmesser variiert. In der Sicherungsposition weist die Fixierungseinrichtung entweder den ersten Durchmesser oder einen dritten Durchmesser auf, der geringfügig kleiner oder gleich dem ersten Durchmesser ist. Zur Durchmesseränderung ist eine Kraft erforderlich, die beispielsweise beim Eindrücken der Lagereinrichtung in den Aufnahmetopf erzeugt wird. Bevorzugt wird die Lagereinrichtung in den Aufnahmetopf in Einfederungsrichtung des Federbeins oder des Schwingungsdämpfers eingesetzt.

In einer vorteilhaften Ausgestaltung ist die Fixierungseinrichtung als ein Sicherungsring ausgebildet. Eine Kombination aus Sicherungsring und Hinterschnitt zur Sicherung der Lagereinheit vor einem Herausziehen aus dem Aufnahmetop in Ausfederungsrichtung bietet eine einfache und kostengünstige Fixierung der Lagereinrichtung in dem Aufnahmetopf. In einer bevorzugten Ausgestaltung ist der Sicherungsring als ein Sprengring ausgebildet. Der Sicherungsring kann im Querschnitt eine runde oder eckige Kontur aufweisen. Ein im Querschnitt rund ausgebildeter Sicherungsrings hat den Vorteil, dass der Sicherungsring die Lagereinheit von selbst axial in die Sicherungsposition zieht, sobald der Sicherungsring ausreichende axiale Überdeckung mit dem Hinterschnitt aufweist, welcher ein Aufweiten ermöglicht. Bevorzugt ist der Hinterschnitt in eine Innenwand des Aufnahmetopfs eingebracht.

In einer vorteilhaften Ausgestaltung ist der Hinterschnitt als eine in den Lagertopf eingebrachte umlaufende Nut ausgebildet. Eine Nut lässt sich einfach und kostengünstig mittels eines Umformprozesses, wie beispielsweise eines Rollprozesses, in den Aufnahmetopf formen. Die Nut kann im Querschnitt eine runde oder eckige Kontur aufweisen.

In einer vorteilhaften Ausgestaltung ist der Hinterschnitt als ein ins Innere des Lagertopfs hineinragender Absatz ausgebildet. Bevorzugt wird ein Durchzug der Karosserie, insbesondere ein Abschnitt des Umfangsrandes des Durchzuges, als Hinterschnitt verwendet. Dadurch kann ein Umformprozess für den Hinterschnitt entfallen, so dass eine einfache und kostengünstige Fixierung des Sicherungsrings geschaffen wird. Hierzu kann der Aufnahmetopf als separates Bauteil ausgebildet und mit der Fahrzeugkarosserie verschweißt sein, wobei der Durchzug der Fahrzeugkarosserie in den Aufnahmetopf hineinragt und den Hinterschnitt bildet. Ferner kann der Absatz auch dadurch gebildet werden, dass ein Umfangsrand des Durchzuges umgebogen oder umgebördelt wird.

Die Zusatzfederaufnahmeeinrichtung ist kraftschlüssig und/oder formschlüssig mit dem Ringelement verbunden. Die Zusatzfederaufnahmeeinrichtung dient zur Befestigung einer Zusatzfeder, wie beispielsweise einer PU-Schaumfeder. Die Zusatzfeder begrenzt eine Bewegung des Federbeins oder des Schwingungsdämpfers relativ zu der Fahrzeugkarosserie. Da die Zusatzfederaufnahmeeinrichtung kraftschlüssig und/oder formschlüssig mit dem Ringelement verbunden ist, kann eine vormontierbare Einheit geschaffen werden, die in den Aufnahmetopf eingesetzt werden kann. Die Zusatzfederaufnahmeeinrichtung kann aus Kunststoff sein.

Das Ringelement und die Zusatzfederaufnahmeeinrichtung sind mittels einer Schnappverbindung miteinander verbunden. Eine Schnappverbindung kann vorliegend auch als eine Clipsverbindung bezeichnet werden. Dadurch lässt sich die Zusatzfederaufnahmeeinrichtung einfach und kostengünstig mit dem Elastomerlager verbinden. Bevorzugt weist die Zusatzfederaufnahmeeinrichtung Schnapphaken oder Rasthaken auf, die eine am Ringelement ausgebildete Rastnase oder mehrere Rastnasen hintergreifen.

In einer vorteilhaften Ausgestaltung verringert die Fixierungseinrichtung beim Einsetzen in den Aufnahmetopf ihren Durchmesser. In einer vorteilhaften Ausgestaltung nimmt der Sicherungsring beim Überführen von der Montageposition in die Sicherungsposition einen Durchmesser ein, der sich von dem Durchmesser des Sicherungsringes in der Montageposition und/oder in der Sicherungsposition unterscheidet. Zur Durchmesseränderung ist eine Kraft erforderlich, die beispielsweise beim Eindrücken der Lagereinrichtung in den Aufnahmetopf erzeugt wird.

In einer vorteilhaften Ausgestaltung weist das Ringelement und/oder die Zusatzfederaufnahmeeinrichtung eine umlaufende Ausnehmung auf, in die die Fixierungseinrichtung beim Einsetzen in den Aufnahmetopf eindrückbar ist. Die Ausnehmung ermöglicht somit eine Zwischenposition für die Fixierungseinrichtung beziehungsweise den Sicherungsring, in welcher dieser einen kleineren Durchmesser aufweist als in der Montageposition und in der Sicherungsposition. Zur Verringerung des Durchmessers des Sicherungsrings ist eine Kraft erforderlich, die beim Einsetzen der Lagereinheit in den Aufnahmetopf erzeugt wird. Wenn der Sicherungsring im Querschnitt eine runde Kontur aufweist, wird durch die Durchmesserverringerung eine Vorspannung in den Sicherungsring eingebracht, so dass sich dieser dann axial in die Endposition zieht, sobald der Sicherungsring ausreichende axiale Überdeckung mit dem Hinterschnitt aufweist.

In einer vorteilhaften Ausgestaltung weisen die Zusatzfederaufnahmeeinrichtung und das Ringelement ineinandergreifende Formschlusskonturen auf, die von einer ersten Position in eine zweite Position bewegbar sind, um die Fixierungseinrichtung und das Elastomerlager von der Montageposition in die Sicherungsposition zu überführen. Zum Überführen der Formschlusskonturen von der ersten Position in eine zweite Position ist eine Kraft erforderlich. Hierzu sind die Formschlusskonturen so auszulegen, dass die Montagekräfte, welche erforderlich sind, um den Durchmesser des Sicherungsringes zu ändern und das Elastomerlager axial vorzuspannen, übertragen werden können. Zwischen den ineinandergreifenden Formschlusskonturen kann eine Reibkraft vorhanden sein.

In einer vorteilhaften Ausgestaltung sind die Formschlusskonturen als eine Rasteinrichtung ausgebildet. Bevorzugt ist die Rasteinrichtung als eine zweistufige Verrastung ausgebildet. In einer ersten Rastposition ist die Zusatzfederaufnahmeeinrichtung an dem Ringelement befestigt, und der Sicherungsring wird für die Montage zwischen der Zusatzfederaufnahmeeinrichtung und dem Ringelement positioniert. Die Rasteinrichtung ist bevorzugt so abgestimmt, dass sie die Montagekräfte, also die Durchmesserreduktion des Sicherungsrings beim Einschieben sowie das axiale Vorspannen des Elastomerkörpers übertragen kann. Beim Einschieben der Lagereinheit wird der Sicherungsring in die Zwischenposition überführt, indem der Durchmesser des Sicherungsrings zunächst reduziert wird. Durch ein weiteres Einschieben wird der Sicherungsring in die Sicherungsposition überführt, indem der Sicherungsring den Hinterschnitt hintergreift. Durch ein weiteres Einschieben der Lagereinheit in den Aufnahmetopf werden die Formschlusskonturen in die zweite Rastposition überführt. Die Rasteinrichtung kann als ein von der Federaufnahme abragender, insbesondere umlaufender Vorsprung ausgebildet sein, der in am ersten Ringelement ausgebildete Vertiefungen eingreift, die die beiden Rastpositionen definieren.

In einer vorteilhaften Ausgestaltung sind die Formschlusskonturen aus einem von der Zusatzfederaufnahmeeinrichtung abragenden Vorsprung und einer dazu in das Ringelement eingebrachten, korrespondierenden Aussparung gebildet. Vorteilhaft dient der Vorsprung als Stützelement für den Sprengring in der Sicherungsposition und blockiert selbigen, so dass dieser nicht elastisch zurückfedern und sich das Federbein oder der Schwingungsdämpfer aus dem Aufnahmetopf herausbewegen kann. Bevorzugt ist der Vorsprung in die Aussparung einschiebbar, wobei der Vorsprung die Erhebung der Rasteinrichtung und die Aussparung die Vertiefungen aufweist.

In einer vorteilhaften Ausgestaltung weist das Elastomerlager ein erstes Ringelement und ein zweites Ringelement auf. Beide Ringelemente sind in Axialrichtung voneinander beabstandet. Bevorzugt liegt das erste Ringelement an dem Sicherungsring an und das zweite Ringelement stützt sich auf dem Topfboden ab. Aufgrund der Elastizität des Elastomerkörpers sind die beiden Ringelemente relativ zueinander bewegbar. Insbesondere wenn das zweite Ringelement an dem Topfboden des Lagertopfes anliegt, kann das erste Ringelement auf das zweite Ringelement zu bewegt werden. Dadurch kann eine Vorspannung in den Elastomerkörper eingebracht werden. Aufgrund der Vorspannung weist das Elastomerlager eine höhere Lebensdauer auf. Zudem übt das zweite Ringelement aufgrund der in den Elastomerkörper eingebrachten Vorspannung eine Kraft auf die Fixierungseinrichtung aus, so dass es zu keiner Relativbewegung während des bestimmungsgemäßen Einsatzes kommen kann. Dadurch können Geräusche vermieden werden. Des Weiteren können durch die axiale Verschiebbarkeit der beiden Ringelemente axiale Längentoleranzen des Elastomerlagers ausgeglichen werden. Ferner kann das Elastomerlager dadurch bei der Montage leicht überdrückt werden, um Raum zum Überführen der Fixierungseinrichtung in die Sicherungsposition zu schaffen. Des Weiteren können Längentoleranzen des Elastomerlagers ausgeglichen werden, in dem eines der Ringelemente spielfrei an der Fixierungseinrichtung anliegt. Die beiden Ringelemente können formschlüssig, kraftschlüssig und/oder stoffschlüssig mit dem Elastomerkörper verbunden sein.

Vorteilhaft liegen die beiden Ringelemente form- und/oder kraftschlüssig an der Wandung des Aufnahmetopfes an. Insbesondere entspricht ein Außendurchmesser der Ringelemente einem Innendurchmesser des Aufnahmetopfes.

In einer vorteilhaften Ausgestaltung ist eine Stützstruktur vorgesehen, die an der Fixierungseinrichtung anliegt, um die Fixierungseinrichtung an einem Herausspringen aus dem Hinterschnitt zu hindern. Die Stützstruktur verhindert, dass der Sicherungsring elastisch zurückfedert und sich das Federbein oder der Schwingungsdämpfer aus dem Aufnahmetopf lösen kann. Insbesondere liegt die Stützstruktur in der Sicherungsposition an dem Sicherungsring an.

In einer vorteilhaften Ausgestaltung ist die Stützstruktur aus einem Abschnitt der Zusatzfederaufnahmeeinrichtung oder dem Ringelement gebildet. Sie kann aber auch als separates Bauteil ausgeführt werden.

In einer vorteilhaften Ausgestaltung ist der Aufnahmetopf formschlüssig, kraftschlüssig und/oder stoffschlüssig mit der Fahrzeugkarosserie verbunden. Der Aufnahmetopf kann mit der Fahrzeugkarosserie verschraubt, vernietet, verklebt und/oder verschweißt sein.

In einer vorteilhaften Ausgestaltung weist der Aufnahmetopf einen ersten Abschnitt mit einem ersten Innendurchmesser und einen zweiten Abschnitt mit einem zweiten Innendurchmesser auf, wobei der erste Innendurchmesser größer oder gleich dem zweiten Innendurchmesser ist, und wobei in der Sicherungsposition das erste Ringelement im ersten Abschnitt und das zweite Ringelement im zweiten Abschnitt angeordnet ist. Dadurch weist der Aufnahmetopf eine gestufte Kontur auf. Durch die gestufte Form des Aufnahmetopfes wird ein Absatz innerhalb des Aufnahmetopfes gebildet, an welchem sich das erste Ringelement abstützen kann, wodurch ein Verschieben des ersten Ringelements in Einfederungsrichtung und damit ein Herausspringen des Sprengrings aus dem Hinterschnitt vermieden wird. Zudem dient der Absatz als Anschlag für das erste Ringelement, wenn die Lagereinheit in den Aufnahmetopf eingesetzt beziehungsweise eingedrückt wird. Dadurch wird das erste Ringelement blockiert, so dass bei einem weiteren Vorschieben die Zusatzfederaufnahmeeinrichtung in die zweite Rastposition überführt werden kann.

Ferner betrifft die Erfindung ein Federbein oder einen Schwingungsdämpfer mit einem Lagerungssystem.

Nachfolgend werden das Lagerungssystem sowie weitere Merkmale und Vorteile anhand von Ausführungsbeispielen näher erläutert, die in den Figuren schematisch dargestellt sind. Hierbei zeigen:
- Fig. 1: einen Querschnitt durch ein Lagerungssystem gemäß einer ersten Ausführungsform mit einer Kolbenstange und einer Zusatzfeder;
- Fig. 2: einen Querschnitt durch das Lagerungssystem gemäß der ersten Ausführungsform mit Kolbenstange und mit Zusatzfeder in einer Montageposition;
- Fig. 3: einen Querschnitt durch das Lagerungssystem gemäß der ersten Ausführungsform ohne Kolbenstange und ohne Zusatzfeder in einer Zwischenposition;
- Fig. 4: einen Querschnitt durch das Lagerungssystem gemäß der ersten Ausführungsform ohne Kolbenstange und ohne Zusatzfeder in einer Sicherungsposition;
- Fig. 5: einen Querschnitt durch das Lagerungssystem gemäß einer zweiten Ausführungsform in der Sicherungsposition;
- Fig. 6: einen Querschnitt durch das Lagerungssystem gemäß einer dritten Ausführungsform in einer Sicherungsposition;
- Fig. 7: einen Querschnitt durch das Lagerungssystem gemäß einer vierten Ausführungsform in der Sicherungsposition;
- Fig. 8: einen Querschnitt durch das Lagerungssystem gemäß einer fünften Ausführungsform in der Sicherungsposition;
- Fig. 9: einen Querschnitt durch das Lagerungssystem gemäß einer sechsten Ausführungsform in einer Montageposition;
- Fig. 10: einen Querschnitt durch das Lagerungssystem gemäß einer sechsten Ausführungsform in einer Zwischenposition;
- Fig. 11: einen Querschnitt durch das Lagerungssystem gemäß einer sechsten Ausführungsform in einer Sicherungsposition; und
- Fig. 12: einen Querschnitt durch das Lagerungssystem gemäß einer siebten Ausführungsform in einer Sicherungsposition.

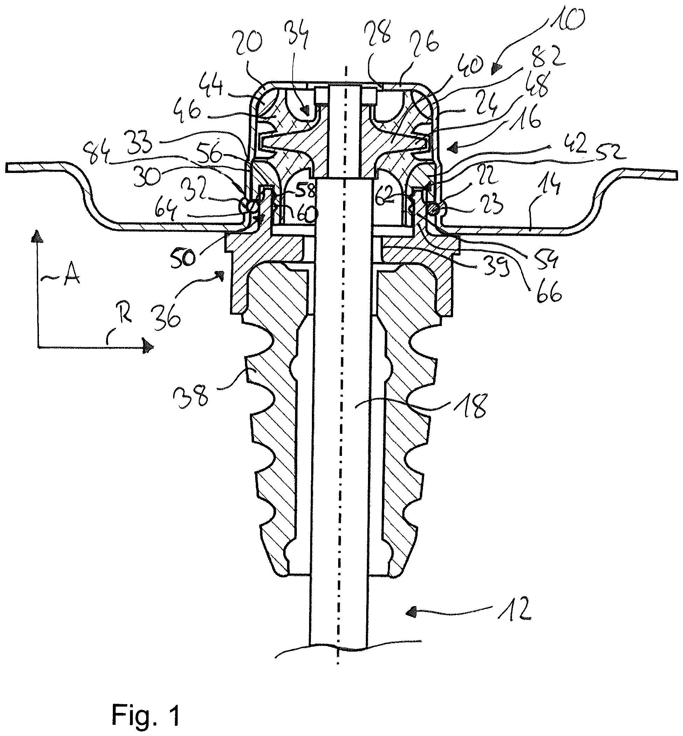

In Fig. 1 ist ein Lagerungssystem 10 zur elastischen Lagerung eines Federbeins 12 oder eines Schwingungsdämpfers an einer Fahrzeugkarosserie 14 gezeigt.

Das Lagerungssystem 10 weist eine Lagereinheit 16 zur Lagerung einer Kolbenstange 18 des Federbeins 12 oder eines Schwingungsdämpfers, einen karosserieseitigen Aufnahmetopf 20, in den die Lagereinheit 16 einsetzbar ist, und eine Fixierungseinrichtung 22 auf. Die Fixierungseinrichtung 22 ist als ein Sicherungsring 23 ausgebildet.

Bei dem in Fig. 1 dargestellten Ausführungsbeispiel ist der Aufnahmetopf aus einem Abschnitt der Fahrzeugkarosserie 14 geformt. Der Aufnahmetopf 20 weist eine Topfwand 24 und einen Topfboden 26 auf, der mit einer Öffnung 28 versehen ist, durch welche sich ein Abschnitt der Kolbenstange 18 hindurch erstrecken kann. Der Aufnahmetopf 20 weist einen Hinterschnitt 30 auf, der vorliegend als eine umlaufende Nut 32 ausgebildet ist, in die der Sicherungsring 23 eingreift, um die Lagereinheit 16 in dem Aufnahmetopf 20 festzulegen.

Der Aufnahmetopf 20 ist ferner mit einem umlaufenden Absatz 33 versehen. Der Absatz 33 unterteilt den Aufnahmetopf 20 in einen ersten Abschnitt 82 mit einem ersten Innendurchmesser und einen zweiten Abschnitt 84 mit einem zweiten Innendurchmesser, wobei der erste Innendurchmesser größer als der zweite Innendurchmesser ist. Dadurch ist der Aufnahmetopf 20 gestuft ausgebildet.

Die Lagereinheit 16 weist ein Elastomerlager 34 zur Lagerung der Kolbenstange 18 und eine Zusatzfederaufnahmeeinrichtung 36 auf, die form- und/oder kraftschlüssig miteinander verbunden sind, wie im Folgenden noch näher erläutert wird.

Die Zusatzfederaufnahmeeinrichtung 36 ist aus Kunststoff gefertigt und dient zur Aufnahme einer Zusatzfeder 38. Die Zusatzfeder 38 begrenzt eine Bewegung des Federbeins 12 relativ zu der Fahrzeugkarosserie 14. Die Zusatzfederaufnahmeeinrichtung weist einen Durchbruch 39 auf, durch welchen sich die Kolbenstange 18 hindurcherstrecken kann. Die Zusatzfeder 38 umgibt die Kolbenstange 18.

Das Elastomerlager 34 weist einen Kern 40 zur Aufnahme der Kolbenstange 18, ein erstes Ringelement 42, ein zweites Ringelement 44 und einen den Kern 40 und die beiden Ringelemente 42, 44 miteinander verbindenden Elastomerkörper 46 auf. Die beiden Ringelemente 42, 44 sind in Radialrichtung R von dem Kern 40 und in Axialrichtung A zueinander beabstandet. Der Kern 40 weist einen in Radialrichtung R abragenden Anschlagabschnitt 48 auf, der zwischen den beiden Ringelementen 42, 44 angeordnet. Der Anschlagabschnitt 48 begrenzt eine Bewegung des Kerns 40 relativ zu den beiden Ringelementen 42, 44.

Im eingesetzten Zustand der Lagereinheit 16 in den Aufnahmetopf 20, der in Fig. 1 dargestellt ist. Hierbei ist das erste Ringelement 42 innerhalb des ersten Abschnitts 82 angeordnet und stützt sich an dem Absatz 33 ab, und das zweite Ringelement 44 ist innerhalb des zweiten Abschnitts 84 angeordnet und liegt an dem Topfboden 26 an. Die beiden Ringelemente 42, 44 sind im eingesetzten Zustand in Axialrichtung A aufeinander zubewegt, so dass eine Vorspannung in den Elastomerkörper 46 eingebracht ist.

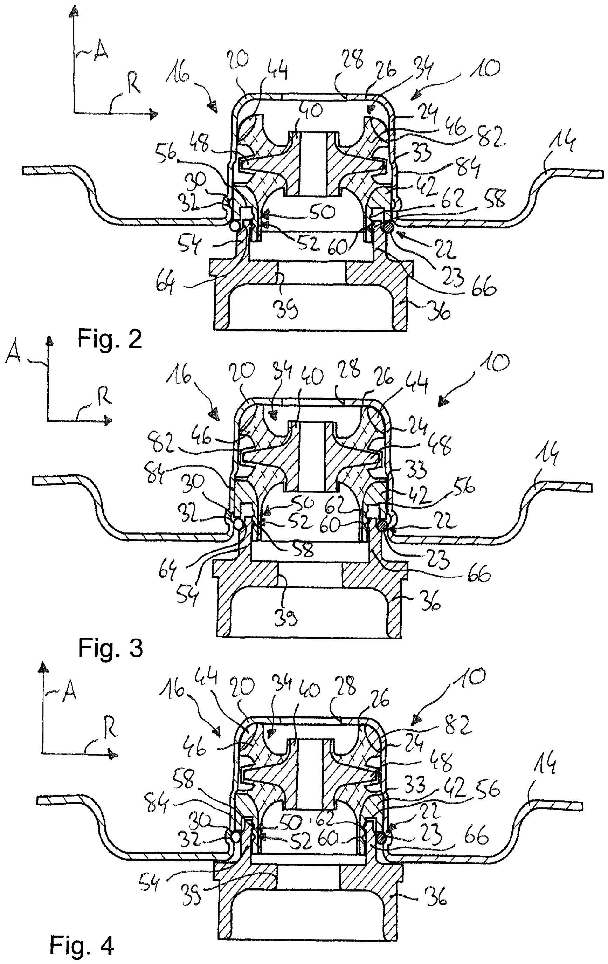

Wie in Fig. 1 ersichtlich ist, sind das Elastomerlager 34 und die Zusatzfederaufnahmeeinrichtung 36 form- und/oder kraftschlüssig miteinander verbunden. Die Zusatzfederaufnahmeeinrichtung 36 und das erste Ringelement 42 weisen dazu ineinandergreifende Formschlusskonturen 50 auf. Wie insbesondere durch eine Zusammenschau der Figuren 2 bis 4 ersichtlich ist, sind die ineinandergreifenden Formschlusskonturen 50 von einer ersten Position in eine zweite Position überführbar.

Die Formschlusskonturen 50 sind aus einer Rasteinrichtung 52, einem von der Zusatzfederaufnahmeeinrichtung 36 abragenden Vorsprung 54 und einer in das erste Ringelement 42 eingebrachten korrespondierenden Aussparung 56 gebildet. Die Rasteinrichtung 52 ist aus einer von dem Vorsprung 54 radial einwärts abragenden Erhebung 58, eine ersten in eine Seitenwand der Aussparung 56 eingebrachten Vertiefung 60 und einer zweiten in die Seitenwand der Aussparung 56 eingebrachten Vertiefung 62 gebildet, in die die Erhebung 58 formschlüssig eingreift. Der Vorsprung 54 ist in die Aussparung 56 einschiebbar und weist an seinem freien Ende außenumfangsseitig eine umlaufende Ausnehmung 64 auf, in die der Sicherungsring 23 einsetzbar ist.

Im Folgenden wird die Befestigung der Lagereinheit 16 in dem Aufnahmetopf 20 anhand der Figuren 2 bis 4 beschrieben. Hierzu wird zunächst der Sicherungsring 23 in die umlaufende Ausnehmung 64 eingesetzt. Anschließend wird die Zusatzfederaufnahmeeinrichtung 36 mit dem Elastomerlager 34 vormontiert, indem der Vorsprung 54 derart in die Aussparung 56 eingesetzt wird, dass die Erhebung 58 in die erste Vertiefung 60 eingreift. Anschließend wird die Kolbenstange 18 mit der zuvor auf diese aufgeschobene Zusatzfeder 38 durch den Kern 40 des Elastomerlagers 34 geführt und mittels einer nicht dargestellten Mutter dort fixiert. Danach wird die vormontierte Einheit umfassend das Elastomerlager 34, die mit dem Elastomerlager 34 verbundene Zusatzfederaufnahmeeinrichtung 36, dem Sicherungsring 23 sowie der Zusatzfeder 38, der Kolbenstange 18 und dem damit verbundenen Federbein 12 in die Montageposition gebracht, indem die vormontierte Einheit von unten in den Aufnahmetopf 20 eingeführt wird, wie dies in Fig. 2 dargestellt ist. Beim Einsetzen der Lagereinheit 16 in den Aufnahmetopf 20 weist der Sicherungsring 23 einen ersten Durchmesser auf.

Durch Eindrücken der Lagereinheit 16 in den Aufnahmetopf 20, indem eine in Axialrichtung A wirkende Kraft auf die Zusatzfederaufnahmeeinrichtung 36 aufgebracht wird, wird die Lagereinheit 16 in den Aufnahmetopf 20 eingeschoben, bis das erste Ringelement 42 an dem Topfboden 26 anliegt. Gleichzeitig wird der Sicherungsring 23 in eine Zwischenposition überführt, indem der Sicherungsring 23 in die Ausnehmung 64 eingedrückt wird. In der Zwischenposition, die in Fig. 3 ersichtlich ist, weist der Sicherungsring 23 einen zweiten Durchmesser auf, der geringer ist als der erste Durchmesser.

In Fig. 3 ist die Zwischenposition kurz vor dem Einschnappen des Sicherungsrings 23 in die Nut 32 gezeigt, bei der das zweite Ringelement 44 an dem Topfboden 26 anliegt. Bei einem weiteren Eindrücken der Lagereinheit 16 in den Aufnahmetopf 20 rutscht das erste Ringelement 42 des Elastomerlagers 34 weiter nach oben, bis der Sicherungsring 23 in die Nut 32 hineinrutscht und das erste Ringelement 42 in seine obere Endposition drückt, in welcher das erste Ringelement 42 an dem Absatz 33 anliegt. In dieser Position ist der Elastomerkörper 46 vorgespannt und das erste Ringelement 42 liegt spielfrei an dem Sicherungsring 23 an. Dadurch ist die Lagereinheit 16 vor einem Herausziehen aus dem Aufnahmetopf 20 in Ausfederungsrichtung gesichert.

Da sich das erste Ringelement 42 am Absatz 33 des Aufnahmetopfs 20 abstützt, führt ein weiteres Eindrücken der Lagereinheit 16 in den Aufnahmetopf 20 dazu, dass sich die Rasteinrichtung 52 in die in Fig. 4 dargestellte zweite Rastposition bewegt, in welcher die Erhebung 58 in die zweite Vertiefung 62 eingreift. Die Rasteinrichtung 52 ist somit derart abgestimmt, dass die Kraft, welche erforderlich ist, um die Rasteinrichtung 52 von der in Fig. 2 dargestellten ersten Rastposition in die in Fig. 4 dargestellte zweite Rastposition zu überführen, größer ist als diejenige Kraft, die erforderlich ist, um das Elastomerlager 34 vorzuspannen und den Sicherungsring 23 in die Nut 32 einzudrücken.

Wie zudem in Fig. 4 ersichtlich ist, wirkt in der zweiten Rastposition der Vorsprung 54 als Stützstruktur 66. Hierzu liegt der Vorsprung 54 radial innen an dem Sicherungsring 23 an und verhindert dadurch, dass dieser elastisch zurückfedert und sich die Lagereinheit 16 aus dem Aufnahmetopf 20 lösen kann.

Im Folgenden werden weitere Ausführungsformen für das Lagerungssystem 10 beschrieben, wobei für gleiche oder funktionsgleiche Teile dieselben Bezugszeichen verwendet werden.

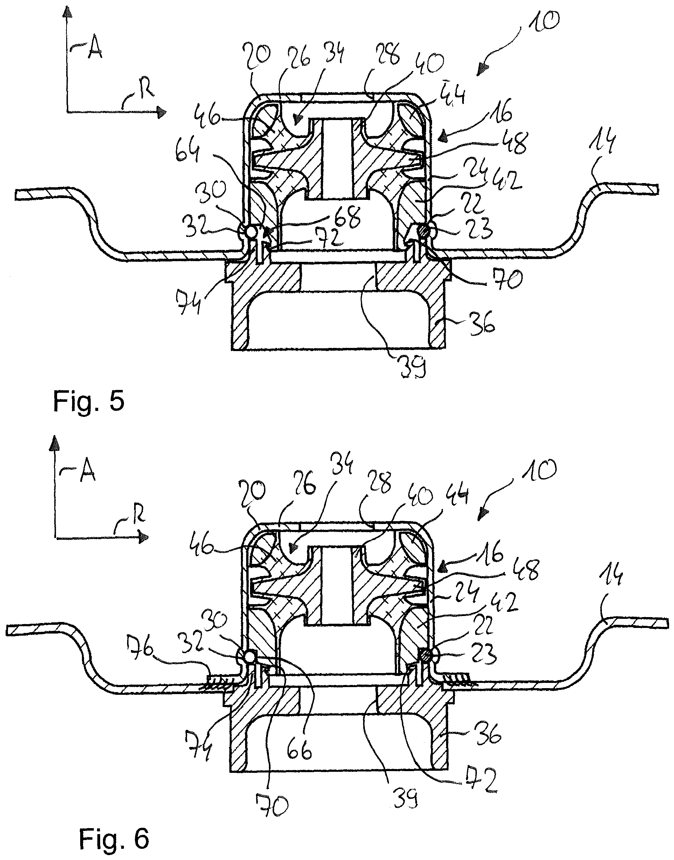

In Fig. 5 ist eine zweite Ausführungsform des Lagerungssystems 10 gezeigt, die sich von der ersten Ausführungsform dadurch unterscheidet, dass die Zusatzfederaufnahmeeinrichtung 36 mit dem ersten Ringelement 42 mittels einer Schnappverbindung 68 oder Clipsverbindung verbunden ist und der Aufnahmetopf 20 keinen umlaufenden Absatz 33 aufweist, an welchem das erste Ringelemente 42 anlegbar ist.

Die Schnappverbindung 68 ist aus Schnapphaken 70 gebildet, die von der Zusatzfederaufnahmeeinrichtung 36 radial abragen, und einer an dem ersten Ringelement 42 abragenden Rastnase 72 gebildet. Die Schnapphaken 70 hintergreifen die Rastnase 72 und legen so die Zusatzfederaufnahmeeinrichtung 36 an dem Elastomerlager 34 fest.

Wie zudem in Fig. 5 ersichtlich ist, unterscheidet sich die zweite Ausführungsform des Weiteren von der ersten Ausführungsform dadurch, dass die Ausnehmung 64, welche eine Verringerung des Durchmessers des Sicherungsring 23 in der Zwischenposition ermöglicht, in das erste Ringelement 42 eingebracht ist.

Zudem weist die Zusatzfederaufnahmeeinrichtung 36 einen Auflageabschnitt 74 auf, auf dem sich der Sicherungsring 23 in der Sicherungsposition abstützt. Der Auflageabschnitt 74 verhindert, dass der Sprengring 23 aus der Nut 32 in Ausfederungsrichtung herausspringen kann.

In Fig. 6 ist eine dritte Ausführungsform des Lagerungssystems 10 gezeigt, die sich von der zweiten Ausführungsform dadurch unterscheidet, dass der Aufnahmetopf 20 als separates Bauteil ausgebildet ist und mit der Fahrzeugkarosserie 14 über einen von dem Aufnahmetopf 20 abragenden Flanschabschnitt 76 stoffschlüssig, beispielsweise durch Verkleben oder Verschweißen, verbunden ist.

Zudem ist bei der in Fig. 6 dargestellten dritten Ausführungsform die Stützstruktur 66 aus einem Abschnitt der Zusatzfederaufnahmeeinrichtung 36 gebildet.

Für die Montage der in Fig. 6 dargestellten Lagereinheit 16 und des Sicherungsringes 23 ist es erforderlich, zunächst das Elastomerlager 34 in den Aufnahmetopf 20 einzupressen. Anschließend muss das erste Ringelement 42 nach oben gedrückt werden, so dass der Sicherungsring 23 in die Nut 32 eingesetzt werden kann. Abschließend wird die Zusatzfederaufnahmeeinrichtung 36 an das erste Ringelement 42 angeclipst.

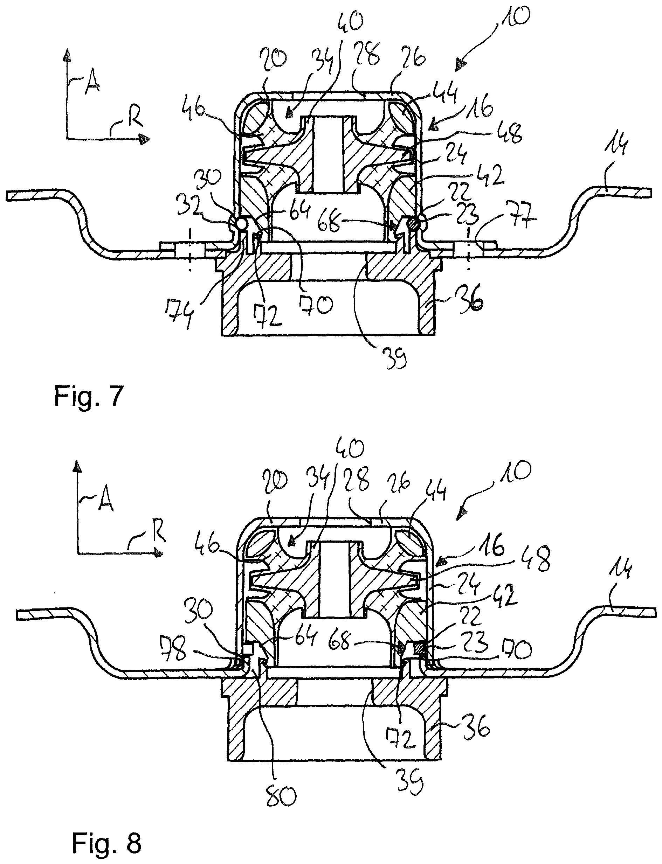

In Fig. 7 ist eine vierte Ausführungsform des Lagerungssystems 10 gezeigt, die sich von der dritten Ausführungsform dadurch unterscheidet, dass der Aufnahmetopf 20 mit der Fahrzeugkarosserie 14, insbesondere dessen Flanschabschnitt 76 verschraubt wird. Hierzu sind die die Fahrzeugkarosserie 14 und den Flanschabschnitt Bohrungen 77 eingebracht. Dadurch kann die Baugruppe bestehend aus Aufnahmetopf 20, Lagereinheit 16 sowie Sicherungsring 23 komplett vormontiert werden und anschließend mit der Fahrzeugkarosserie 14 verschraubt werden.

In Fig. 8 ist eine fünfte Ausführungsform des Lagerungssystems 10 gezeigt, die sich von den anderen Ausführungsformen in der Ausführung des Hinterschnitts 30 unterscheidet. Der Hinterschnitt 30 wird durch einen ins Innere des Aufnahmetopfs 20 hineinragenden Absatz 78 gebildet, der durch Umbördelung eines Randabschnitts des Durchzugs 80 erzeugt wird.

Der Aufnahmetopf 20 ist bei der in Fig. 8 dargestellten Ausführungsform stoffschlüssig mit der Fahrzeugkarosserie 14, beispielsweise durch Kleben oder Schweißen, verbunden. Bei der in Fig. 8 dargestellten Ausführungsform ist der Sicherungsring 23 im Querschnitt rechteckförmig.

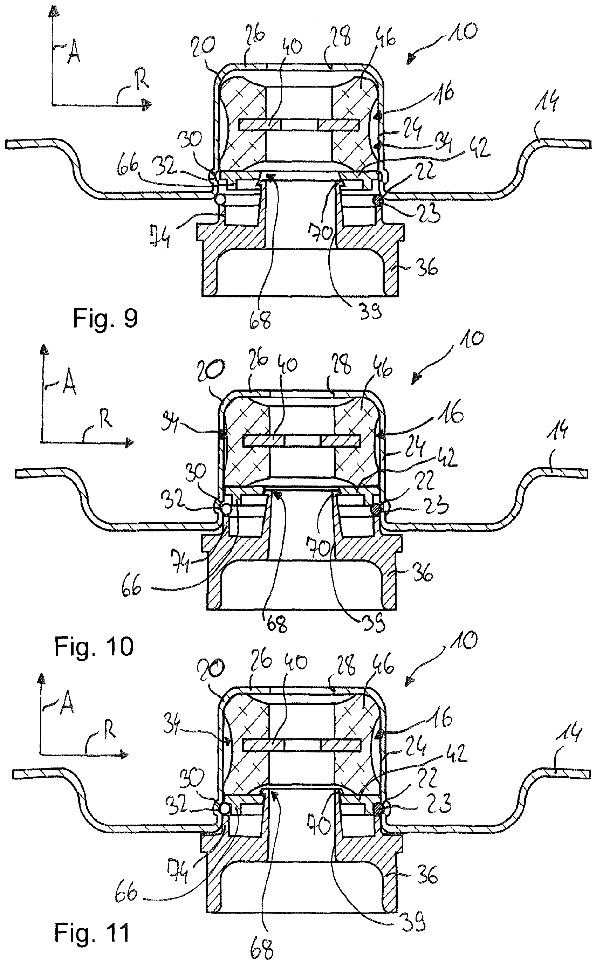

In den Figuren 9 bis 11 ist eine sechste Ausführungsform des Lagerungssystems 10 gezeigt, die sich von den vorhergehenden Ausführungsformen dadurch unterscheidet, dass das Elastomerlager 34 nur ein erstes Ringelement 42 sowie einen als Scheibe ausgebildeten Kern 40 aufweist. Das erste Ringelement 42 kann stoffschlüssig mit dem Elastomerkörper 46 verbunden sein, oder als ein separates Teil ausgebildet sein, das zusammen mit dem Elastomerlager 34 in den Aufnahmetopf 20 eingesetzt wird.

In Fig. 9 ist die Montageposition gezeigt, in der das Elastomerlager 34 zusammen mit dem ersten Ringelement 42 in den Aufnahmetopf 20 eingesetzt ist. Die Zusatzfederaufnahmeeinrichtung 36 ist in der Montageposition noch nicht mit dem ersten Ringelement 42 verrastet. Der Sicherungsring 23 liegt in der Montageposition auf dem Auflageabschnitt 74 auf und muss sich noch einfädeln und im Durchmesser verjüngen.

In der in Fig. 10 gezeigten Zwischenposition liegt der Elastomerkörper 46 an dem Topfboden 26 an und ist axial vorgespannt. Die Schnapphaken 70 sind bereits radial nach innen gedrückt und der Durchmesser des Sicherungsringes 23 ist verjüngt.

In Fig. 11 ist die Sicherungsposition gezeigt, in welcher der Sicherungsring 23 in den Hinterschnitt 30 eingerastet ist. Die Schnapphaken 70 sind ebenfalls eingerastet und hintergreifen das erste Ringelement 42. Das erste Ringelement 42 ist aufgrund der Vorspannung des Elastomerkörpers 46 in der Sicherungsposition zurückgefedert und drückt das erste Ringelement 42 gegen den Sicherungsring 23. Das erste Ringelement 42 weist zudem eine Stützstruktur 66 auf, die den Sicherungsring 23 von innen blockiert.

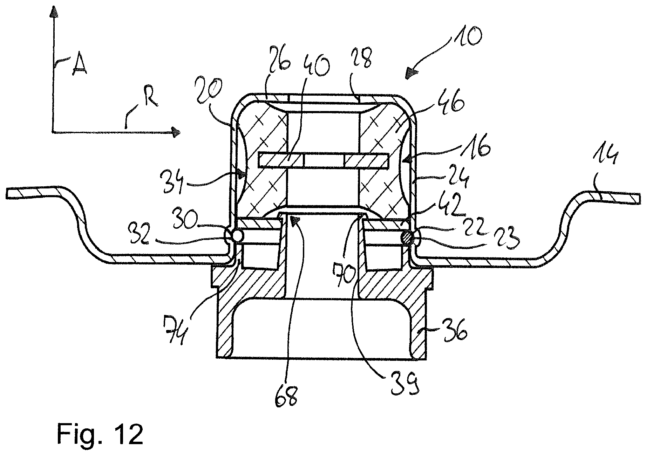

In Fig. 12 ist eine siebte Ausführungsform des Lagerungssystems 10 gezeigt, die sich von der sechsten Ausführungsform dadurch unterscheidet, dass das erste Ringelement 42 keine Stützstruktur 66 aufweist.

Das Lagerungssystem 10 zeichnet sich dadurch aus, dass die Lagereinheit 16 von unten in den Aufnahmetopf 20 eingesetzt und vor einem Herausziehen aus dem Aufnahmetopf 20 mittels eines Sicherungsrings 23, der in eine am Aufnahmetopf 20 ausgebildete Nut 32 eingreift, gesichert wird. Dadurch wird die Montage vereinfacht und die Montagekosten werden reduziert. Ferner ist bei dem Lagerungssystem 10 eine Demontage ohne Zugang von der anderen Seite der Fahrzeugkarosserie 14 möglich, indem die Rastnase 72 der Zusatzfederaufnahmeeinrichtung 36 entriegelt und anschließend die Fixierungseinrichtung 22 von unten gelöst wird. Dadurch kann im Falle einer Reparatur das Federbein 12 oder der Schwingungsdämpfer samt Lagereinheit 16 einfach demontiert werden.

### Bezugszeichenliste

- 10: Lagerungssystem
- 12: Federbein
- 14: Fahrzeugkarosserie
- 16: Lagereinheit
- 18: Kolbenstange
- 20: Aufnahmetopf
- 22: Fixierungseinrichtung
- 23: Sicherungsring
- 24: Topfwand
- 26: Topfboden
- 28: Öffnung
- 30: Hinterschnitt
- 32: Nut
- 33: Absatz
- 34: Elastomerlager
- 36: Zusatzfederaufnahmeeinrichtung
- 38: Zusatzfeder
- 39: Durchbruch
- 40: Kern
- 42: erstes Ringelement
- 44: zweites Ringelement
- 46: Elastomerkörper
- 48: Anschlagabschnitt
- 50: ineinandergreifende Formschlusskonturen
- 52: Rasteinrichtung
- 54: Vorsprung
- 56: Aussparung
- 58: Erhebung
- 60: erste Vertiefung
- 62: zweite Vertiefung
- 64: Ausnehmung
- 66: Stützstruktur
- 68: Schnappverbindung
- 70: Schnapphaken
- 72: Rastnase
- 74: Auflageabschnitt
- 76: Flanschabschnitt
- 77: Bohrung
- 78: Absatz
- 80: Durchzug
- 82: erster Abschnitt
- 84: zweiter Abschnitt

- A: Axialrichtung
- R: Radialrichtung

## Patentansprüche

1. Lagerungssystem (10) zur elastischen Lagerung eines Federbeins (12) oder eines Schwingungsdämpfers an einer Fahrzeugkarosserie (14), aufweisend eine Lagereinheit (16) zur Lagerung einer Kolbenstange (18) des Federbeins (12) oder des Schwingungsdämpfers, einen karosserieseitigen Aufnahmetopf (20), in den die Lagereinheit (16) einsetzbar ist, und eine Fixierungseinrichtung (22), die die Lagereinheit (16) vor einem Herausziehen aus dem Aufnahmetopf (20) sichert, wobei die Lagereinheit (16) wenigstens eine Zusatzfederaufnahmeeinrichtung (36) und ein Elastomerlager (34) zur elastischen Lagerung der Kolbenstange (18) aufweist, das einen Kern (40) zur Aufnahme der Kolbenstange (18), einen Elastomerkörper (46) und wenigstens ein Ringelement (42) aufweist, wobei das Elastomerlager (34) und die Fixierungseinrichtung (22) derart in den Aufnahmetopf (20) eingesetzt sind, dass die Fixierungseinrichtung (22) einen am Aufnahmetopf (20) ausgebildeten Hinterschnitt (30) hintergreift, dass sich das Ringelement (42) auf der Fixierungseinrichtung (22) abstützt und dass der Elastomerkörper (46) vorgespannt ist und das Ringelement (42) gegen die Fixierungseinrichtung (22) drückt, **dadurch gekennzeichnet, dass** das Ringelement (42) und die Zusatzfederaufnahmeeinrichtung (36) kraftschlüssig und/oder formschlüssig mittels einer Schnappverbindung (68) miteinander verbunden sind.

2. Lagerungssystem (10) nach Anspruch 1, **dadurch gekennzeichnet, dass** die Fixierungseinrichtung (22) als ein Sicherungsring (23) ausgebildet ist.

3. Lagerungssystem (10) nach Anspruch 1 oder 2, **dadurch gekennzeichnet, dass** der Hinterschnitt (30) als eine in den Aufnahmetopf (20) eingebrachte umlaufende Nut (32) ausgebildet ist.

4. Lagerungssystem (10) nach Anspruch 1 oder 2, **dadurch gekennzeichnet, dass** der Hinterschnitt (30) als ein ins Innere des Aufnahmetopfs (20) hineinragender Absatz (78) ausgebildet ist.

5. Lagerungssystem (10) nach einem der vorhergehenden Ansprüche, **dadurch gekennzeichnet, dass** die Fixierungseinrichtung (22) beim Einsetzen in den Aufnahmetopf (20) ihren Durchmesser verringert.

6. Lagerungssystem (10) nach einem der vorhergehenden Ansprüche, **dadurch gekennzeichnet, dass** das Ringelement (42) und/oder die Zusatzfederaufnahmeeinrichtung (36) eine umlaufende Ausnehmung (64) aufweist, in die die Fixierungseinrichtung (22) beim Einsetzen in den Aufnahmetopf (20) eindrückbar ist.

7. Lagerungssystem (10) nach einem der vorhergehenden Ansprüche, **dadurch gekennzeichnet, dass** die Zusatzfederaufnahmeeinrichtung (36) und das Ringelement (42) ineinandergreifende Formschlusskonturen (50) aufweisen, die beim Einsetzen des Elastomerlagers (34) und der Fixierungseinrichtung (22) in den Aufnahmetopf (20) von einer ersten Position in eine zweite Position bewegbar sind.

8. Lagerungssystem (10) nach Anspruch 7, **dadurch gekennzeichnet, dass** die Formschlusskonturen (50) als eine Rasteinrichtung (52) ausgebildet sind.

9. Lagerungssystem (10) nach Anspruch 7 oder 8, **dadurch gekennzeichnet, dass** die Formschlusskonturen (50) aus einem von der Zusatzfederaufnahmeeinrichtung (36) abragenden Vorsprung (54) und einer dazu in das Ringelement (42) eingebrachten korrespondierenden Aussparung (56) gebildet sind.

10. Lagerungssystem nach einem der vorhergehenden Ansprüche, **dadurch gekennzeichnet, dass** das Elastomerlager (34) ein erstes Ringelement (42) und ein zweites Ringelement (44) aufweist.

11. Lagerungssystem (10) nach einem der vorhergehenden Ansprüche, **dadurch gekennzeichnet, dass** eine Stützstruktur (66) vorgesehen ist, die an der Fixierungseinrichtung (22) anliegt, um die Fixierungseinrichtung (22) an einem Herausspringen aus dem Hinterschnitt (30) zu hindern.

12. Lagerungssystem (10) nach Anspruch 11, **dadurch gekennzeichnet, dass** die Stützstruktur (66) aus einem Abschnitt der Zusatzfederaufnahmeeinrichtung (36) oder dem Ringelement (42) gebildet ist.

13. Lagerungssystem (10) nach einem der vorhergehenden Ansprüche, **dadurch gekennzeichnet, dass** der Aufnahmetopf (20) formschlüssig, kraftschlüssig und/oder stoffschlüssig mit der Fahrzeugkarosserie (14) verbunden ist.

14. Federbein (12) oder Schwingungsdämpfer mit einem Lagerungssystem (10) nach einem der Ansprüche 1 bis 13.

## Claims

1. Bearing system (10) for resiliently mounting a suspension strut (12) or a vibration damper on a vehicle body (14), having a bearing unit (16) for mounting a piston rod (18) of the suspension strut (12) or of the vibration damper, a body-side receiving pot (20), the bearing unit (16) being insertable into the receiving pot, and a fixing device (22) which secures the bearing unit (16) against withdrawal from the receiving pot (20), the bearing unit (16) having at least one additional spring receiving device (36) and an elastomer bearing (34) for elastic mounting of the piston rod (18), wherein the elastomer bearing (34) has a core (40) for receiving the piston rod (18), an elastomer body (46) and at least one ring element (42), wherein the elastomer bearing (34) and the fixing device (22) are inserted into the receiving pot (20) in such a way that the fixing device (22) engages behind an undercut (30) formed on the receiving pot (20), in that the ring element (42) is supported on the fixing device (22), and in that the elastomer body (46) is prestressed and presses the ring element (42) against the fixing device (22), **characterized in that** the ring element (42) and the additional spring receiving device (36) are connected to one another in a force-fitting and/or form-fitting manner by means of a snap connection (68).

2. Bearing system (10) according to claim 1, **characterized in that** the fixing device (22) is designed as a retaining ring (23).

3. Bearing system (10) according to claim 1 or 2, **characterized in that** the undercut (30) is designed as a circumferential groove (32) introduced into the receiving pot (20).

4. Bearing system (10) according to claim 1 or 2, **characterized in that** the undercut (30) is formed as a shoulder (78) projecting into the interior of the receiving pot (20).

5. Bearing system (10) according to one of the preceding claims, **characterized in that** the fixing device (22) reduces its diameter when inserted into the receiving pot (20).

6. Bearing system (10) according to one of the preceding claims, **characterized in that** the ring element (42) and/or the additional spring receiving device (36) has a circumferential recess (64) into which the fixing device (22) can be pressed when inserted into the receiving pot (20).

7. Bearing system (10) according to one of the preceding claims, **characterized in that** the additional spring receiving device (36) and the ring element (42) have interlocking positive-locking contours (50) which can be moved from a first position into a second position when the elastomer bearing (34) and the fixing device (22) are inserted into the receiving pot (20).

8. Bearing system (10) according to claim 7, **characterized in that** the positive locking contours (50) are formed as a locking device (52).

9. Bearing system (10) according to claim 7 or 8, **characterized in that** the positive locking contours (50) are formed from a projection (54) projecting from the additional spring receiving device (36) and a corresponding recess (56) made in the ring element (42).

10. Bearing system according to one of the preceding claims, **characterized in that** the elastomer bearing (34) comprises a first ring element (42) and a second ring element (44).

11. Bearing system (10) according to any one of the preceding claims, **characterized in that** a support structure (66) is provided which abuts the fixing means (22) to prevent the fixing means (22) from popping out of the undercut (30).

12. Bearing system (10) according to claim 11, **characterized in that** the support structure (66) is formed from a portion of the additional spring receiving means (36) or the ring element (42).

13. Bearing system (10) according to one of the preceding claims, **characterized in that** the receiving pot (20) is connected to the vehicle body (14) in a form-fitting, force-fitting and/or material-fitting manner.

14. Suspension strut (12) or vibration damper having a mounting system (10) according to any one of claims 1 to 13.

## Revendications

1. Système de palier (10) pour le montage élastique d'une jambe de force à ressort (12) ou d'un amortisseur de vibrations sur une carrosserie de véhicule (14), comprenant une unité de palier (16) pour le montage d'une tige de piston (18) de la jambe de force à ressort (12) ou de l'amortisseur de vibrations, un pot de réception (20) côté carrosserie, dans laquelle l'unité de palier (16) peut être insérée et un dispositif de fixation (22) qui empêche l'unité de palier (16) d'être retirée du pot de réception (20), l'unité de palier (16) présentant au moins un dispositif supplémentaire de réception de ressort (36) et un palier en élastomère (34) pour le montage élastique de la tige de piston (18), lequel palier en élastomère (34) présente un noyau (40) pour recevoir la tige de piston (18), et un corps en élastomère (46) et au moins un élément annulaire (42), le palier en élastomère (34) et le dispositif de fixation (22) étant insérés dans le pot de réception (20) de telle sorte que le dispositif de fixation (22) s'engage derrière une contre-dépouille (30) formée sur le pot de réception (20), **caractérisé en ce que** l'élément annulaire (42) s'appuie sur le dispositif de fixation (22) et **en ce que** le corps en élastomère (46) est précontraint et presse l'élément annulaire (42) contre le dispositif de fixation (22), **caractérisé en ce que** l'élément annulaire (42) et le dispositif supplémentaire de réception de ressort (36) sont reliés entre eux par force et/ou par forme au moyen d'une liaison par encliquetage (68).

2. Système de palier (10) selon la revendication 1, **caractérisé en ce que** le dispositif de fixation (22) est conçu comme une bague de retenue (23).

3. Système de palier (10) selon la revendication 1 ou 2, **caractérisé en ce que** la contre-dépouille (30) est formée comme une rainure circonférentielle (32) introduite dans le pot de réception (20).

4. Système de palier (10) selon la revendication 1 ou 2, **caractérisé en ce que** la contre-dépouille (30) est formée comme un épaulement (78) faisant saillie à l'intérieur du pot de réception (20).

5. Système de palier (10) selon l'une des revendications précédentes, **caractérisé en ce que** le dispositif de fixation (22) réduit son diamètre lorsqu'il est inséré dans le pot de réception (20).

6. Système de palier (10) selon l'une des revendications précédentes, **caractérisé en ce que** l'élément annulaire (42) et/ou le dispositif supplémentaire de réception de ressort (36) présente un évidement périphérique (64) dans lequel le dispositif de fixation (22) peut être enfoncé lorsqu'il est inséré dans le pot de réception (20).

7. Système de palier (10) selon l'une quelconque des revendications précédentes, **caractérisé en ce que** le dispositif supplémentaire de réception de ressort (36) et l'élément annulaire (42) présentent des contours (50) à engagement positif qui peuvent être déplacés d'une première position à une seconde position lorsque le palier élastomère (34) et le dispositif de fixation (22) sont insérés dans le pot de réception (20).

8. Système de palier (10) selon la revendication 7, **caractérisé en ce que** les contours à verrouillage positif (50) sont formés comme un dispositif de verrouillage (52).

9. Système de palier (10) selon la revendication 7 ou 8, **caractérisé en ce que** les contours à verrouillage positif (50) sont formés d'une saillie (54) faisant saillie du dispositif supplémentaire de réception de ressort (36) et d'un évidement correspondant (56) réalisé dans l'élément annulaire (42).

10. Système de palier selon l'une des revendications précédentes, **caractérisé en ce que** le palier élastomère (34) comprend un premier élément annulaire (42) et un second élément annulaire (44).

11. Système de palier (10) selon l'une des revendications précédentes, **caractérisé en ce qu'**il est prévu une structure de support (66) qui vient en butée contre le dispositif de fixation (22) pour empêcher le dispositif de fixation (22) de sortir de la contre-dépouille (30).

12. Système de palier (10) selon la revendication 11, **caractérisé en ce que** la structure de support (66) est formée par une partie du dispositif supplémentaire de réception de ressort (36) ou de l'élément annulaire (42).

13. Système de montage (10) selon l'une des revendications précédentes, **caractérisé en ce que** le godet de réception (20) est relié à la carrosserie du véhicule (14) par complémentarité de forme, de force et/ou de matière.

14. Jambe de force de suspension (12) ou amortisseur de vibrations avec un système de montage (10) selon l'une des revendications 1 à 13.
